# DEMANDE DE BREVET EUROPEEN

(11) **EP 3 708 511 A1**
(43) Date de publication de la demande: **16.09.2020**
(21) Numéro de dépôt: 20162954.0
(22) Date de dépôt: 13.03.2020
(51) Int. Cl.: B65D 30/08, B65D 30/20, B31B 170/20

(54) **SAC D'EMBALLAGE A RECYCLAGE FACILITE, ET PROCEDE DE FABRICATION D'UN TEL SAC**

(30) Priorité: 13.03.2019 FR 1902548
(71) Demandeur: Coveris Flexibles France, 43290 Montfaucon en Velay (FR)
(72) Inventeur: LANGELIER, Philipe, 43120 MONISTROL SUR LOIRE (FR)
(74) Mandataire: Cabinet Laurent & Charras

(57) **Abrégé**

L'invention concerne un sac d'emballage (1) comprenant un sac externe (2) comprenant une paroi avant (2a) et une paroi arrière (2b) reliées par des soufflets (2c), un fond (2d), et une ouverture (2e) de remplissage.

Selon l'invention, le sac d'emballage (1) comprend un sac interne (3) comprenant au moins, une paroi avant (3a) et une paroi arrière (3b) reliées par des soufflets (3c), un fond (3d), et une ouverture (3e) de remplissage, les sacs interne (3) et externe (2) étant attachés l'un à l'autre, au moins au niveau de leur ouverture (2e ; 3e) de remplissage, par des moyens (5) d'attache temporaire.

## Description

### DOMAINE TECHNIQUE

L'invention se rattache au secteur technique des sacs d'emballage en matière plastique, tels que par exemple des sacs pour l'emballage de produits alimentaires.

Plus particulièrement l'invention trouve une application avantageuse dans le domaine des sacs en matière plastique flexible, notamment obtenus à partir d'une bande d'un film d'épaisseur inférieure à 200 µm, environ.

L'invention concerne plus particulièrement un sac d'emballage du type précité, dont le recyclage est facilité, ainsi qu'un procédé de fabrication d'un tel sac d'emballage.

### ART ANTERIEUR

Il est connu de l'art antérieur un sac d'emballage comprenant une paroi avant et une paroi arrière reliées par des soufflets, un fond, et une ouverture de remplissage.

Ce type de sac est généralement réalisé en continu, à partir d'un film en matière plastique, tel que du polyéthylène, éventuellement complexé avec d'autres matériaux.

Lors de sa fabrication, et d'une manière connue, le film en matière plastique est soumis en continu à des opérations successives de pliage et de soudage, ou collage, ou autre pour réaliser les différentes parties constitutives du sac.

L'inconvénient de l'art antérieur réside principalement dans la difficulté à recycler ce type de sac d'emballage, tout en permettant de répondre à d'autres contraintes, telles que la conservation des produits emballés dans le sac, la communication commerciale visuelle présente sur les parois externes du sac, le remplissage, etc.

### EXPOSE DE L'INVENTION

L'un des buts de l'invention est donc de remédier aux problèmes précité en fournissant un sac d'emballage dont le recyclage est facilité, tout en permettant de répondre d'une manière optimale aux contraintes de l'application désirée.

À cet effet, il a été mis au point un sac d'emballage comprenant, d'une manière connue, un sac externe comprenant une paroi avant et une paroi arrière, éventuellement reliées par des soufflets, un fond, et une ouverture de remplissage.

Selon l'invention, le sac d'emballage comprend également un sac interne comprenant lui aussi au moins, une paroi avant et une paroi arrière, éventuellement reliées par des soufflets, un fond, et une ouverture de remplissage. Les sacs interne et externe sont attachés l'un à l'autre, au moins au niveau de leur ouverture de remplissage, par des moyens d'attache temporaire.

De cette manière, le sac interne peut présenter des caractéristiques et propriétés adaptées à l'application désirée, tandis que le sac externe peut présenter d'autres caractéristiques et propriétés pour être utilisé, par exemple, à des fins de communication commerciale, notamment par impression de ses parois externes.

Il ressort de ce qui précède qu'après avoir utilisé le sac, il est possible de détacher les sacs interne et externe pour les traiter et recycler séparément.

Les sacs interne et externe sont attachés l'un à l'autre par toute technique appropriée et, par exemple, par collage, soudage localisé, ou complexage localisé. L'essentiel réside dans le faite qu'un utilisateur, après utilisation, peut détacher et séparer manuellement les sacs interne et externe l'un de l'autre, en vue de leur recyclage séparé. L'opération est donc manuelle, contrairement à l'état de la technique où certains sacs doivent être défibrés pour être recyclés.

Les sacs interne et externe sont attachés l'un à l'autre au niveau de leur ouverture de remplissage, mais peuvent également être attachés l'un à l'autre au niveau de leurs parois avant et arrière, par exemple en leur milieu, sur leurs bordures, etc., et éventuellement au niveau de leurs fonds.

Selon l'application désirée, les sacs interne et externe peuvent être chacun réalisé à partir d'un unique film, et peuvent par exemple être réalisés dans des matières identiques ou différentes. Les sacs interne et externe peuvent également chacun être constitué par un film multicouche, sans sortir du cadre de l'invention.

De préférence, les sacs externe et interne présentent des fonds à coupes droites.

Selon une autre forme de réalisation, le sac externe présente un fond à coupe droite, tandis que le sac interne présent un fond à coins coupés, c'est-à-dire que les bords latéraux des soufflets sont raccordés au fond par des lignes de coupe obliques.

Dans une autre forme de réalisation, le sac externe peut également présenter un fond à coins coupés.

Selon une forme de réalisation particulière, les soufflets du sac interne sont libres de s'ouvrir et de se replier sur toute la longueur du sac, et sont alors imbriqués dans les soufflets du sac externe.

Selon une autre forme de réalisation, le sac d'emballage est remarquable en ce que, notamment avant remplissage, le sac interne est positionné uniquement dans l'un des plis du soufflet du sac externe, notamment contre l'une des parois avant ou arrière. Dans cette forme de réalisation, avant remplissage les soufflets du sac interne ne sont pas imbriqués dans les soufflets du sac externe.

À partir de cette dernière forme de réalisation, les sacs interne et externe présentent, par exemple, chacun un fond à coupe droite, éventuellement replié sur le corps du sac en direction de l'ouverture. Par ailleurs, dans cette forme de réalisation, les soufflets du sac interne et du sac externe peuvent ne pas être libres sur toute la longueur des soufflets, et sont par exemple soudés sur eux-mêmes au niveau du fond.

L'invention concerne également un procédé de fabrication d'un tel type de sac d'emballage, remarquable en ce que le sac interne est inséré ou glissé à l'intérieur du sac externe, lesdits sacs interne et externe étant ensuite attachés automatiquement l'un à l'autre, par toute technique appropriée, au niveau de leur ouverture de remplissage par des moyens d'attache temporaire.

À partir de ce concept, plusieurs formes de réalisation sont possibles.

Par exemple, le sac interne est inséré automatiquement à l'intérieur du sac externe en superposant les parois avant et arrière, et les soufflets du sac interne, avec les parois avant et arrière, et les soufflets du sac externe. Dans cette configuration, les soufflets du sac interne se retrouvent imbriqués dans les soufflets du sac externe.

Il est également possible d'insérer le sac interne à l'intérieur du sac externe dans l'un des plis seulement des soufflets du sac externe, notamment contre l'une des parois avant ou arrière du sac externe. Dans cette configuration, avant remplissage, les soufflets des sacs interne et externe ne sont pas imbriqués l'un dans l'autre.

### DESCRIPTION DES FIGURES

D'autres avantages et caractéristiques de l'invention ressentiront mieux de la description qui va suivre, données à titre d'exemple non limitatif, à partir des figures annexées dans lesquelles :
[Fig. 1] la figure 1 est une représentation illustrant, en perspective, un sac d'emballage selon l'invention ;
[Fig. 2] la figure 2 est une représentation illustrant en détail les ouvertures des sac interne et externe
[Fig. 3] la figure 3 est une représentation illustrant les sacs interne et externes avant assemblage, positionnés côte à côte ;
[Fig. 4] la figure 4 est une représentation schématique en perspective illustrant l'opération d'insertion du sac interne à l'intérieur du sac externe, avec les soufflets du sac interne et externe imbriqués l'un dans l'autre ;
[Fig. 5] la figure 5 est une représentation en perspective illustrant le fond du sac externe, avec les soufflets non libres sur toute la longueur du sac, notamment soudés au niveau du fond ;
[Fig. 6] la figure 6 est une représentation en perspective illustrant le fond du sac interne, avec les soufflets libres sur toute leur longueur du sac ;
[Fig. 7] la figure 7 est une représentation illustrant, vu de côté, une autre forme de réalisation des sacs interne et externe, positionnés côte à côte ;
[Fig. 8] la figure 8 est une représentation illustrant en perspective l'insertion du sac interne dans l'un des soufflets uniquement du sac externe.

### DESCRIPTION DETAILLEE DE L'INVENTION

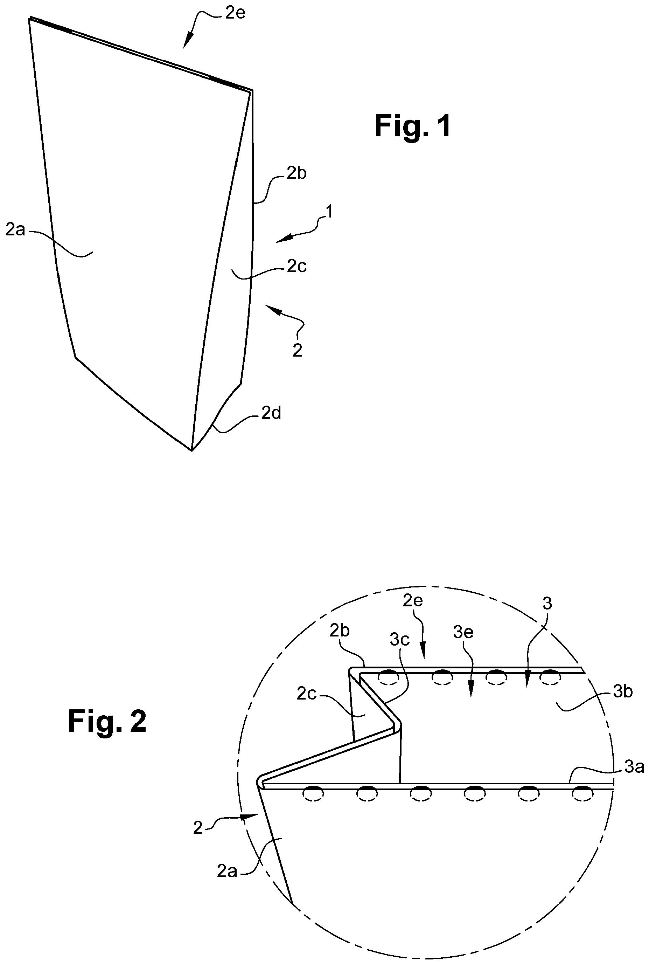

En référence aux figures 1 à 8, l'invention concerne un sac d'emballage (1) constitué d'un sac externe (2) et d'un sac interne (3), attachés l'un à l'autre, au moins au niveau de leur ouverture (2e ; 3e) de remplissage, par des moyens (5) d'attache temporaires.

Ainsi, après avoir utilisé le sac d'emballage (1), l'utilisateur peut détacher le sac interne (3) et facilement traiter les sacs externe (2) et interne (3) séparément l'un de l'autre en vue de leur recyclage.

Plus précisément, les sacs interne (3) et externe (2) sont chacun réalisés à partir d'un film plastique, par exemple d'une épaisseur inférieure à 200 µm, et soumis à des opérations connues et successives de pliage et soudage, en vue de former des sacs comprenant chacun, une paroi avant (2a ; 3a) et une paroi arrière (2b ; 3b), éventuellement reliées par des soufflets (2c ; 3c), un fond (2d ; 3d), et une ouverture (2e ; 3e) de remplissage.

Le film plastique constituant chacun des sacs interne (3) et externe (2) peut être de tout type approprié, en fonction de l'application désirée.

Par exemple, les sacs interne (3) et externe (2) sont réalisés dans des matières identiques ou différentes. Par ailleurs, le film plastique constituant les sacs interne (3) et externe (2) peut être un film multicouche, ou bien un film constitué d'une seule couche.

La composition des sacs interne (3) et externe (2) dépend de l'application désirée, et des contraintes de celle-ci, et est bien connue de l'état de la technique.

Par exemple, le sac interne (3) peut être un sac étanche permettant une certaine conservation des produits contenus dans le sac, tandis que le sac externe (2) peut être un sac par exemple en papier, permettant une communication visuelle et commerciale du sac d'emballage (1), et un recyclage facilité.

Le film qui constitue les sacs interne (3) ou externe (2) peut être par exemple réalisé en polyéthylène ou en polytéréphtalate d'éthylène, éventuellement complexé avec du polypropylène ou tout autre matière bien connue de l'état de la technique.

L'essentiel de la présente invention réside dans l'assemblage de deux sacs insérés l'un dans l'autre.

A partir de ce concept, diverses formes de réalisation sont possibles.

Par exemple, pour attacher les sacs interne (3) et externe (2) l'un avec l'autre, les moyens (5) d'attache temporaires peuvent se présenter sous la forme d'un adhésif, de points de colle, de points de soudure, ou de complexage localisés. Ces moyens (5) d'attache temporaire sont de préférence réalisés sur toute la circonférence des ouvertures (2e ; 3e) de remplissage des sacs interne (3) et externe (2).

Les moyens d'attache temporaire permettent à l'utilisateur de pouvoir, après utilisation, détacher manuellement et séparer les sacs interne (3) et externe (2) l'un de l'autre.

Les moyens d'attache temporaire peuvent être positionnés en tous points des parois avant (2a ; 3a) et arrière (2b ; 3b), par exemple en leur milieu, au niveau de leurs bordures, et aussi éventuellement au niveau du fond (2d ; 3d) des sacs interne (3) et externe (2).

L'invention concerne également le procédé de fabrication d'un tel sac d'emballage (1).

Selon une étape du procédé, le sac interne (3) est inséré automatiquement à l'intérieur du sac externe (2), et les sacs interne (3) et externe (2) sont ensuite attachés automatiquement l'un à l'autre au moins au niveau de leur ouverture (2e ; 3e) de remplissage par les moyens (5) d'attache temporaire.

Par exemple, les sacs interne (3) et externe (2) sont fabriqués séparément selon des processus classiques de fabrication. Les sacs interne (3) et externe (2) ont respectivement leurs dimensions et caractéristiques finales.

Le procédé d'insertion automatique du sac interne (3) dans le sac externe (2) consiste en premier lieu à ouvrir l'ouverture (2e) du sac externe (2) en écartant les parois avant (2a) ou arrière (2b) dudit sac externe (2) avec un système de préhension, tel qu'un système d'aspiration, de ventouses ou de préhension mécanique, agissant sur au moins l'une des parois avant (2a) ou arrière (2b) du sac externe (2).

Le procédé consiste ensuite à insérer automatiquement le sac interne (3) à l'intérieur du sac externe (2).

Pour ce faire, plusieurs solutions sont envisageables. Par exemple, un système de préhension mécanique, tel qu'un système de ventouses, monté sur un bras d'insertion saisi le sac interne (3) et l'insère automatiquement à l'intérieur du sac externe (2).

Selon une deuxième solution, il est également possible d'insérer une plaque, palette, ou bande rigide, à l'intérieur du sac interne (3) et de déplacer ladite plaque, palette ou bande rigide en direction du sac externe (2) pour pousser ledit sac interne (3) à l'intérieur du sac externe (2).

La plaque, palette, ou bande rigide peut également être seulement utilisée pour apporter de la rigidité au sac interne, en combinaison avec le système de préhension mécanique monté bras d'insertion mentionné plus haut.

Au préalable à l'insertion du sac interne (3) dans le sac externe (2), des points de colle, de matière thermofusible ou de tout autre moyen de liaison peuvent être déposés sur le haut ou toute autre partie du sac interne (3) pour permettre sa liaison, au moins partielle, avec le sac externe (2).

Le sac interne (3) est inséré automatiquement à l'intérieur du sac externe (2) en superposant les parois avant (3a) et arrière (3b), et éventuellement les soufflets (3c) du sac interne (3), avec les parois avant (2a) et arrière (2b) et les soufflets (2c) du sac externe (2).

Dans cette configuration, les sacs interne (3) et externe (2) peuvent comprendre tous deux des fonds (2d ; 3d) à coupes droites.

En pratique, les sacs interne (3) et externe (2) présentent des dimensions complémentaires et ajustées les unes par rapport aux autres. Le sac interne (3) est donc légèrement plus petit que le sac externe (2) pour s'ajuster à l'intérieur du sac externe (2). Les ouvertures des sacs interne (3) et externe (2) doivent coïncider et être à l'affleurement l'une de l'autre.

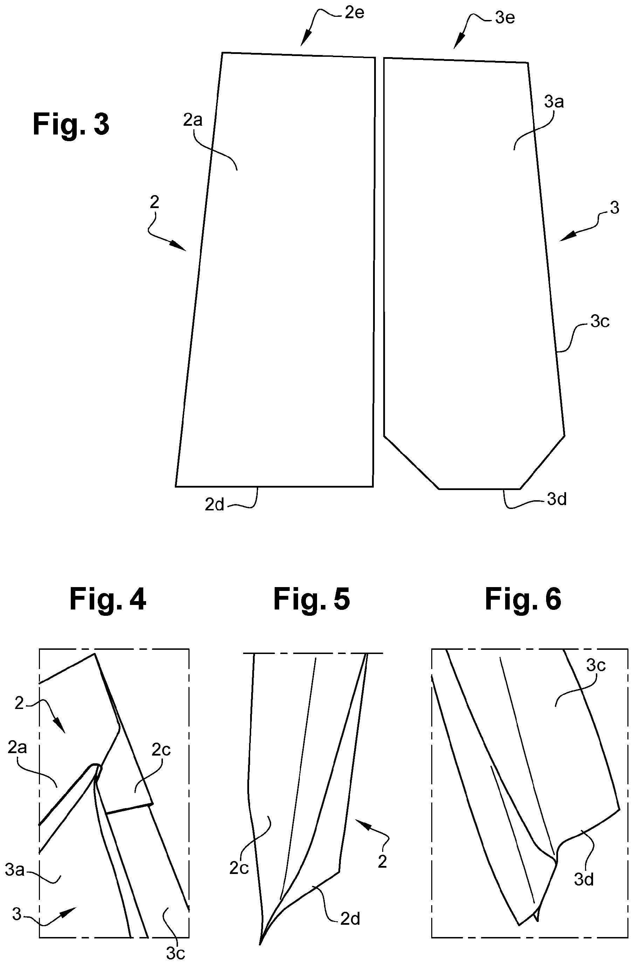

De ce qui précède, et en référence aux figures 2 et 4, on obtient un sac interne (3) superposé au sac externe (2), avec notamment les soufflets (2c ; 3c) des deux sacs imbriqués l'un dans l'autre.

Dans cette configuration, il est alors nécessaire que les soufflets (3c) du sac interne (3) soient libres de s'ouvrir et se replier sur la totalité de leur longueur du sac. En d'autres termes, les soufflets (3c) ne sont pas soudés sur eux-mêmes au niveau du fond du sac interne (3), voir figure 6.

Les soufflets (2c) du sac externe (2) peuvent quant à eux être soudés sur eux-mêmes au niveau du fond du sac externe (2), voir figure 5.

En référence à la figure 3, le sac interne (3) présente avantageusement un fond (3d) à coins coupés, c'est-à-dire que les bords latéraux des soufflets (3c) sont raccordés au fond (3d) par des lignes de coupe obliques.

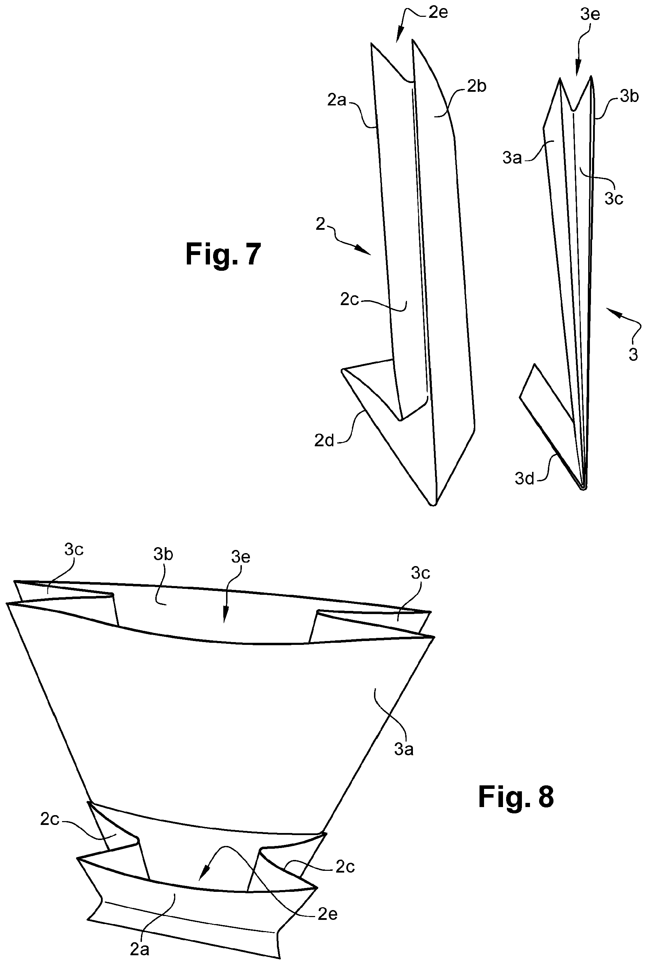

Selon une autre forme de réalisation du procédé, et en référence à la figure 8, le sac interne (3) est inséré intérieur du sac externe (2), dans l'un seulement des plis des soufflets (2c) du sac externe (2), de sorte que le sac interne (3) se retrouve positionné contre l'une des parois avant (2a) ou arrière 2(b) du sac externe (2).

Dans cette forme de réalisation, les sacs interne (3) et externe (2) peuvent comprendre des fonds (2d ; 3d) à coupes droites, dont les soufflets (2c ; 3c) sont éventuellement soudés au niveau du fond du sac interne (3) de sorte qu'ils ne sont pas libres de s'ouvrir et se replier sur la totalité de la longueur des sacs. Selon une autre forme de réalisation, et en référence à la figure 7, les sacs interne (3) et externe (2) présentent tous deux des fonds (2d ; 3d) à coupes droites, repliés sur le corps des sacs, en direction de l'ouverture.

## Revendications

1. Sac d'emballage (1) comprenant un sac externe (2) comprenant une paroi avant (2a) et une paroi arrière (2b), éventuellement reliées par des soufflets (2c), un fond (2d), et une ouverture (2e) de remplissage, ***caractérisé* en ce qu'**il comprend un sac interne (3) comprenant au moins, une paroi avant (3a) et une paroi arrière (3b), éventuellement reliées par des soufflets (3c), un fond (3d), et une ouverture (3e) de remplissage, les sacs interne (3) et externe (2) étant attachés l'un à l'autre, au moins au niveau de leur ouverture (2e ; 3e) de remplissage, par des moyens (5) d'attache temporaire.

2. Sac d'emballage (1) selon la revendication 1, ***caractérisé* en ce que** les sacs interne (3) et externe (2) sont attachés l'un à l'autre par un adhésif, par collage, ou par soudage localisé.

3. Sac d'emballage (1) selon l'une des revendications précédentes, ***caractérisé* en ce que** les sacs interne (3) et externe (2) sont attachés l'un à l'autre au niveau de leurs parois avant (2a ; 3a) et arrière (2b ; 3b), et éventuellement au niveau de leur fond (2d ; 3d).

4. Sac d'emballage (1) selon l'une des revendications précédentes, ***caractérisé* en ce que** les sacs interne (3) et externe (2) sont réalisés dans des matières différentes.

5. Sac d'emballage (1) selon l'une des revendications précédentes, ***caractérisé* en ce que** les sacs externe (2) et interne (3) présentent des fonds (2d ; 3d) à coupes droites.

6. Sac d'emballage (1) selon l'une des revendications 1 à 4, ***caractérisé* en ce que** le sac externe (2) présente un fond (2d) à coupe droite, tandis que le sac interne (3) présente un fond (3d) à coins coupés.

7. Sac d'emballage (1) selon l'une des revendications précédentes, ***caractérisé* en ce que** les soufflets (3c) du sac interne (3) sont libres de s'ouvrir et de se replier sur toute la longueur du sac interne (3), et sont imbriqués dans les soufflets (2c) du sac externe (2).

8. Sac d'emballage (1) selon l'une des revendications 1 à 6, ***caractérisé* en ce que** le sac interne (3) est positionné dans l'un des plis des soufflets (2c) du sac externe (2), contre l'une des parois avant (2a) ou arrière (2c).

9. Procédé de fabrication d'un sac d'emballage (1) selon la revendication 1, ***caractérisé* en ce que** le sac interne (3) est inséré automatiquement à l'intérieur du sac externe (2), les sacs interne (3) et externe (2) étant ensuite attachés automatiquement l'un à l'autre au moins au niveau de leur ouverture (2e ; 3e) de remplissage, par des moyens (5) d'attache temporaire.

10. Procédé de fabrication selon la revendication 9, ***caractérisé* en ce que** le sac interne (3) est inséré automatiquement à l'intérieur du sac externe (2) en superposant les parois avant (3a) et arrière (3b), et les soufflets (3c) du sac interne (3), avec les parois avant (2a) et arrière (2b), et les soufflets (2c) du sac externe (2).

11. Procédé de fabrication selon la revendication 9, ***caractérisé* en ce que** le sac interne (3) est inséré automatiquement à l'intérieur du sac externe (2) dans l'un des plis seulement des soufflets (2c) du sac externe (2), contre l'une des parois avant (2a) ou arrière (2b).
